(19) Europäisches Patentamt
European Patent Office
Office européen des brevets

(11) **EP 4 733 723 A1**

(12) **EUROPÄISCHE PATENTANMELDUNG**

(43) Veröffentlichungstag:
**29.04.2026  Patentblatt 2026/18**

(21) Anmeldenummer: **25204492.0**

(22) Anmeldetag: **25.09.2025**

(51) Internationale Patentklassifikation (IPC):
*G01J 1/44* (2006.01)  *G01N 21/3504* (2014.01)

(52) Gemeinsame Patentklassifikation (CPC):
**G01J 1/44; G01N 21/3504;** G01J 2001/444;
G01J 2001/446

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität:  **25.10.2024  DE 102024131188**

(71) Anmelder: **E+E ELEKTRONIK GES.M.B.H.
4209 Engerwitzdorf (AT)**

(72) Erfinder:
• HUMER, Markus
4600 Wels (AT)
• HINTERMÜLLER, Marcus
4060 Leonding (AT)
• HAIDER, Albin
4211 Alberndorf (AT)
• WEILGUNI, Michael
4210 Gallneukirchen (AT)

(74) Vertreter: Hofmann, Ernst
Dr. Johannes Heidenhain GmbH,
Patentabteilung,
Postfach 12 60
83292 Traunreut (DE)

(54) **ELEKTRONISCHE ANORDNUNG UND VERFAHREN ZUM BESTIMMEN EINES PHOTOSTROMS UNTER BERÜCKSICHTIGUNG EINER TEMPERATURABHÄNGIGKEIT SOWIE OPTISCHER GASSENSOR**

(57)    Die Erfindung betrifft eine elektronische Anordnung (1) zum Bestimmen eines Photostroms unter Berücksichtigung einer Temperaturabhängigkeit. Die elektronische Anordnung (1) umfasst einen Photodetektor (10), der einen Anodenanschluss (11) und einen Kathodenanschluss (12) aufweist, und einen Operationsverstärker (20), der einen ersten Eingang (21), einen zweiten Eingang (22) und einen Ausgang (23) aufweist, wobei der Anodenanschluss (11) des Photodetektors (10) und der erste Eingang (21) des Operationsverstärkers (20) elektrisch miteinander verbunden sind und der Kathodenanschluss (12) des Photodetektors (10) und der zweite Eingang (22) des Operationsverstärkers (20) elektrisch miteinander verbunden sind. Die elektronische Anordnung (1) umfasst ferner einen Vorspannungsanschluss (50), der über einen ersten Pfad (41) mit dem Anodenanschluss (11) des Photodetektors (10) und dem ersten Eingang (21) des Operationsverstärkers (20) elektrisch verbunden ist, und einen Spannungsteiler (30), der innerhalb des ersten Pfades (41) zwischen dem Anodenanschluss (11) des Photodetektors (10) und dem Vorspannungsanschluss (50) angeordnet ist. Die Erfindung betrifft ferner einen optischen Gassensor (100) und ein Verfahren (200) zum Bestimmen eines Photostroms unter Berücksichtigung einer Temperaturabhängigkeit.

Fig. 1

**Beschreibung**

Die Erfindung betrifft eine elektronische Anordnung und ein Verfahren zum Bestimmen eines Photostroms unter Berücksichtigung einer Temperaturabhängigkeit. Die Erfindung betrifft ferner einen optischen Gassensor mit der elektronischen Anordnung.

Aus dem Stand der Technik ist bekannt, Photodetektoren, zum Beispiel Photodioden aus InSb oder InAsSb, für optische Gassensoren zu verwenden. Ein derartiger Photodetektor erlaubt neben der Strahlungsmessung des von einem Gas nicht absorbierten Lichtes (und daraus zum Beispiel die Bestimmung eines Kohlendioxid-Gehaltes des Gases) zusätzlich die Bestimmung, inwiefern die eigene Temperatur des jeweiligen Photodetektors die Strahlungsmessung beeinflusst. Diese Bestimmung wird benötigt, um die Temperaturabhängigkeit der jeweiligen Strahlungsmessung zu kompensieren.

So beschreibt die EP 3 581 898 A1 eine elektronische Anordnung, die eine Photodiode und einen Transimpedanzverstärker umfasst und die selektiv in einen Photostrommessmodus und in einen Temperaturmessmodus schaltbar ist. Dabei ist in dem Photostrommessmodus ein Anodenanschluss der Photodiode mit einem ersten Eingang eines Operationsverstärkers des Transimpedanzverstärkers verbunden, ein Kathodenanschluss der Photodiode ist mit einem zweiten Eingang des Operationsverstärkers verbunden, und ein erster Vorspannungsanschluss ist mit dem ersten Eingang und dem Anodenanschluss verbunden. In dem Temperaturmessmodus ist der Anodenanschluss mit einem Masseanschluss der elektronischen Anordnung verbunden, der Kathodenanschluss ist mit dem zweiten Eingang verbunden, und der erste Vorspannungsanschluss ist mit dem ersten Eingang verbunden und von dem Anodenanschluss getrennt.

Um zwischen dem Photostrommessmodus und dem Temperaturmessmodus umschalten zu können, umfasst die elektronische Anordnung aus der EP 3 581 898 A1 drei Schalter. Im Photostrommessmodus sind zwei der drei Schalter geschlossen, sodass an der Photodiode keine Spannung anliegt und somit im Quasikurzschluss betrieben wird. Nur durch das Detektieren einer Strahlung wird ein Photostrom der Photodiode erzeugt, welcher durch den Transimpedanzverstärker verstärkt und in eine Spannung umgewandelt wird. Im Temperaturmessmodus sind die zwei zuvor geschlossenen Schalter offen und lediglich der dritte Schalter geschlossen, sodass über die Photodiode eine Vorspannung abfällt, wodurch auch ohne die Detektion einer Strahlung ein temperaturabhängiger (Sperr-) Strom fließt. Dieser Strom wird mit einem reduzierten Verstärkungsfaktor verstärkt. Die reduzierte Verstärkung ist hier notwendig, da die am Vorspannungsanschluss anliegende Spannung typischerweise im Bereich von 150 bis 200 mV liegt. Niedrigere Werte können üblicherweise nicht direkt eingestellt werden. Daher muss die Verstärkung entsprechend verringert werden, damit der Strom nach Verstärkung in einem erfassbaren Bereich, der z. B. mittels eines Analog-Digital-Umsetzers digitalisiert erfasst werden kann, liegt.

Die Implementierung von mehreren Schaltern zum aktiven Umschalten zwischen den verschiedenen Messmodi birgt jedoch die Gefahr von Fehlerquellen, zum Beispiel durch Defekte und/oder Verschleißeffekte. Daher besteht weiterhin Bedarf nach einer verbesserten Lösung, insbesondere einer vereinfachten elektronischen Anordnung, die mit einer zumindest verringerten Anzahl an möglichen Fehlerquellen in der Lage ist, einen Photostrom unter Berücksichtigung einer Temperaturabhängigkeit zu bestimmen.

Entsprechend ist eine Aufgabe der Erfindung, eine verbesserte, insbesondere vereinfachte, elektronische Anordnung zum Bestimmen eines Photostroms bereitzustellen, mittels derer bevorzugt Nachteile bekannter Lösungen zumindest teilweise vermieden werden, wobei zum Beispiel eine möglichst genaue und zuverlässige Bestimmung eines Photostroms unter Berücksichtigung einer Temperaturabhängigkeit eines Photodetektors weiterhin gewährleistet ist.

Die Aufgabe wird gelöst durch die Merkmale der unabhängigen Ansprüche. Vorteilhafte Weiterbildungen sind in den abhängigen Ansprüchen und der Beschreibung angegeben.

Gemäß einem ersten allgemeinen Aspekt der Erfindung wird eine elektronische Anordnung zum Bestimmen eines Photostroms unter Berücksichtigung einer Temperaturabhängigkeit bereitgestellt.

Die elektronische Anordnung umfasst einen Photodetektor, der einen Anodenanschluss und einen Kathodenanschluss aufweist.

Die elektronische Anordnung umfasst einen (insbesondere spannungsgesteuerten) Operationsverstärker, der einen ersten Eingang, einen zweiten Eingang und einen Ausgang aufweist. Der Anodenanschluss des Photodetektors und der erste Eingang des Operationsverstärkers sind (zum Beispiel über einen zweiten Pfad) elektrisch miteinander verbunden. Der Kathodenanschluss des Photodetektors und der zweite Eingang des Operationsverstärkers sind elektrisch miteinander verbunden.

Die elektronische Anordnung umfasst einen Vorspannungsanschluss, der über einen ersten Pfad mit dem Anodenanschluss des Photodetektors und dem ersten Eingang des Operationsverstärkers elektrisch verbunden ist.

Die elektronische Anordnung umfasst einen Spannungsteiler, der innerhalb des ersten Pfades zwischen dem Anodenanschluss des Photodetektors und dem Vorspannungsanschluss angeordnet ist.

Unter einem Photodetektor, auch optischer Detektor und/oder Lichtsensor genannt, ist im Rahmen dieser Offenbarung ein elektronisches Bauteil zu verstehen, das Strahlung auf Basis des inneren photoelektrischen Effekts in ein elektrisches Signal umwandelt. Dieses elektrische Signal wird auch als Photostrom und/oder Photosignal bezeichnet. Der Photodetektor ist somit ein strahlungsmessendes Bauteil, wobei es sich bei der Strahlung nicht nur um sichtbares Licht, sondern auch um Infrarotstrahlung und Ultraviolettstrahlung handeln kann. Beispielsweise kann der Photodetektor eine Photodiode sein, d. h. eine Halbleiterdiode, welche Strahlung an einem p-n-Übergang oder pin-Übergang auf Basis des inneren photoelektrischen Effekts in einen elektrischen Strom, d. h. einen Photostrom, umwandelt.

Für den Photodetektor sind zahlreiche Anwendungsmöglichkeiten zum Erfassen einer auf den Photodetektor fallenden Strahlung denkbar. Beispielsweise kann der Photodetektor bzw. die elektronische Anordnung genutzt werden, um einen Gasgehalt eines bestimmten Gases, zum Beispiel Kohlendioxid, in der Umgebung des Photodetektors zu bestimmen. Hierzu kann eine Strahlungsquelle aktiviert und eine Strahlung in Richtung des Photodetektors ausgeben werden, wobei sich ein zu untersuchendes Gas zwischen der Strahlungsquelle und dem Photodetektor befindet. Der Gasgehalt, zum Beispiel die Gaskonzentration, kann anhand der Intensität der durch den Photodetektor erfassten Strahlung (d. h. des erzeugten Photostroms) in Relation zu einer erwarteten Intensität der Strahlung (d. h. eines erwarteten Photostroms) bestimmt werden, wobei der Anteil der Strahlung, der den Photodetektor nicht erreicht, von dem Gas absorbiert oder abgelenkt worden ist. Daher kann die elektronische Anordnung zum Beispiel als Teil eines Gassensors ausgebildet sein.

Unabhängig von der Bestrahlung des Photodetektors kann ein durch den Photodetektor fließender (Sperr-) Strom durch Anlegen einer Vorspannung erzeugt werden. Diese Vorspannung wird vorliegend durch eine am Vorspannungsanschluss bereitgestellte Spannung über den ersten Pfad erzeugt. Diese (Sperr-) Strom bzw. die Vorspannung ist temperaturabhängig und kann so dazu genutzt werden, um den Temperatureinfluss auf den Photodetektor bzw. auf Ströme, die durch den Photodetektor fließen, zu ermitteln. Dies geschieht zum Beispiel durch eine Bereitstellung einer Spannung am Vorspannungsanschluss und einer Messung einer Ausgangsspannung des Photodetektors, ohne dass der Photodetektor selbst eine Strahlung erfasst bzw. der Photodetektor nicht bestrahlt wird.

Unter dem Operationsverstärker ist im Rahmen dieser Offenbarung ein gleichspannungsgekoppelter Verstärker mit einem beispielsweise sehr hohen Verstärkungsfaktor zu verstehen. Der Operationsverstärker ist somit ein elektronisches Bauteil, das die Differenz zweier Eingangsspannungen aufnimmt und diese Differenz verstärkt als eine auf ein Bezugspotential bzw. Masse bezogene Ausgangsspannung ausgibt. Entsprechend sind die Eingänge des Operationsverstärkers beispielsweise hochohmig und der Ausgang des Operationsverstärkers niederohmig.

Vorliegend werden die erste Eingangsspannung am ersten Eingang des Operationsverstärkers über den Vorspannungsanschluss und die zweite Eingangsspannung am zweiten Eingang des Operationsverstärkers über den Photodetektor bereitgestellt. Dadurch ist der Operationsverstärker insbesondere dazu ausgestaltet, um eine Ausgangsspannung bereitzustellen, die von der über den Photodetektor bereitgestellten Eingangsspannung abhängt und diese mit dem Verstärkungsfaktor verstärkt. Dadurch kann zum Beispiel ein durch die Bestrahlung des Photodetektors erzeugter Photostrom entsprechend verstärkt werden und am Ausgang des Operationsverstärkers mittels eines Strom- und/oder Spannungsmessgeräts erfasst werden.

Unter dem Spannungsteiler ist im Rahmen dieser Offenbarung ein elektrisches Bauteil zu verstehen, das ausgestaltet ist, um zumindest eine Ausgangsspannung zu erzeugen, die ein Bruchteil einer Eingangsspannung des Spannungsteilers ist. Der Spannungsteiler kann dabei eine Eingangsspannung in mehrere Teilspannungen aufteilen, die als Ausgangsspannungen am Spannungsteiler (bzw. an Ausgängen des Spannungsteilers) abgegriffen werden können.

Beispielsweise kann der Spannungsteiler durch eine Reihenschaltung aus zwei oder mehreren Widerständen realisiert sein, wobei zwischen den Widerständen zumindest eine Teilspannung abgegriffen werden kann. Vorliegend ist der Spannungsteiler insbesondere zweckmäßig ausgestaltet, um eine Vorspannung des Photodetektors (als Ausgangsspannung des Spannungsteilers) zu erzeugen und bereitzustellen, die ein Bruchteil bzw. eine Teilspannung einer am Vorspannungsanschluss anliegenden Spannung (als Eingangsspannung des Spannungsteilers) ist.

Unter einem Pfad, zum Beispiel dem ersten Pfad, kann im Rahmen der Offenbarung jede geeignete elektrische Verbindung bzw. jeder geeignete elektrische Leiter zwischen zwei oder mehreren Anschlüssen verstanden werden. Ein Pfad kann daher auch als elektrische Verbindung und/oder elektrischer Leiter bezeichnet sein. Ein Pfad kann mehrere Teilpfade aufweisen, wobei jeweils zumindest ein elektrisches Bauteil zwischen zwei der mehreren Teilpfade angeordnet sein kann, zum Beispiel der Spannungsteiler innerhalb des ersten Pfades.

Unter einem Widerstand wird im Rahmen der Offenbarung ein elektronisches Bauteil verstanden, welches einen, vorzugsweise unveränderlichen ohmschen Widerstand aufweist.

Die oben beschriebene elektronische Anordnung gemäß der vorliegenden Erfindung bietet eine Reihe von Vorteilen. So ermöglicht die Implementierung des Spannungsteilers, einen Photostrom, der bei einer Bestrahlung des Photodetektors erzeugt wird, und einen (Sperr-) Strom (auch: Ruhestrom), der zur Untersuchung der Temperaturabhängigkeit des Photodetektors bei anliegender Vorspannung ohne Bestrahlung des Photodetektors bestimmt werden kann, in einem gleichen Messmodus zu bestimmen. Es wird also eine kombinierte Messung von Temperatur und Photostrom in einem gemeinsamen Messmodus ermöglicht, sodass keine Schalter benötigt werden.

So hat sich bei der Entwicklung der Erfindung erfreulicherweise und überraschenderweise herausgestellt, dass die Temperaturabhängigkeit von Photodetektoren verschiedener Detektortypen qualitativ unabhängig von der anliegenden Vorspannung ist, d. h. das Temperaturverhalten des Sperrstroms ist qualitativ unabhängig von der angelegten (Vor- ) Spannung. Ferner verhalten sich die Photodetektoren, insbesondere bei niedrigen Vorspannungen, wie ohmsche Widerstände und damit linear, d. h. der durch den jeweiligen Photodetektor fließende (Sperr-) Strom verläuft im Wesentlichen linear zur Vorspannung. Nichtlinearitäten, die dem speziellen Aufbau der Photodetektoren geschuldet sind, treten (zum Beispiel in Form von Stufen bzw. Sprüngen in den Verläufen) erst bei höheren Vorspannungen oberhalb 10 V, insbesondere im Bereich von 12 V, auf.

Darüber hinaus hat sich erfreulicherweise und überraschenderweise herausgestellt, dass der Photostrom unabhängig von einer angelegten Vorspannung ist, zumindest wenn sich die Vorspannung in einem (u. a. in Abhängigkeit vom jeweiligen Detektortyp des Photodetektors) ausreichend geringen Spannungsbereich befindet. Anders ausgedrückt, ein erzeugter Sperrstrom hat zumindest bei einer geringen Vorspannung (zum Beispiel unterhalb 2 mV) keinen qualitativen Einfluss auf einen Photostrom, der durch das Erfassen einer Strahlung auf Basis des inneren photoelektrischen Effekts erzeugt wird.

Somit können Messungen eines Photostroms und Messungen zur Untersuchung der Temperaturabhängigkeit mittels des (Sperr-) Stroms bei der gleichen Vorspannung durchgeführt werden, solange diese Vorspannung in einem ausreichend geringen Spannungsbereich (zum Beispiel unterhalb 2 mV) liegt.

Eine derart ausreichende Reduzierung der am Vorspannungsanschluss anliegenden Eingangsspannung, die über den ersten Pfad die Vorspannung am Photodetektor bereitstellt, wird gemäß der vorliegenden Erfindung durch den Spannungsteiler gewährleistet. Dadurch wird ermöglicht, dass die Messungen des Photostroms und des (Sperr-) Stroms bei der gleichen Vorspannung durchgeführt werden können. Ein Umschalten der elektronischen Anordnung zwischen verschiedenen Messmodi, insbesondere ein Umschalten in einen Quasikurzschluss für die Messung des Photostroms, wie dies im zuvor beschriebenen Stand der Technik erfolgt, ist somit nicht mehr notwendig.

Entsprechend muss die elektronische Anordnung keine Schaltelemente aufweisen. Der Wegfall von Schaltelementen ist nicht nur hilfreich bei der Weiterentwicklung des Messprinzips, zum Beispiel in eine integrierte Schaltung, sondern führt auch zu einem geringen Platzbedarf, geringeren Bauteil- und Herstellungskosten und einer reduzierten Anzahl an Fehlerquellen.

Gemäß einer Ausführungsvariante sind der Anodenanschluss des Photodetektors, der erste Eingang des Operationsverstärkers und der Vorspannungsanschluss fest und/oder schalterlos elektrisch miteinander verbunden, d. h. insbesondere ohne Schaltelemente zwischen dem Anodenanschluss des Photodetektors, dem ersten Eingang des Operationsverstärkers und dem Vorspannungsanschluss und/oder ohne Schaltelemente innerhalb des ersten Pfades.

Aufgrund des Spannungsteilers ist es, wie zuvor erläutert, nicht notwendig, die elektronische Anordnung zwischen verschiedenen Messmodi umzuschalten, sodass es auf vorteilhafte Weise auch nicht notwendig ist, Unterbrechungen zwischen elektrischen Verbindungen und damit dafür erforderliche Schaltelemente innerhalb des ersten Pfades oder sogar in der gesamten elektronischen Anordnung vorzusehen.

Gemäß einer Ausführungsform ist der Spannungsteiler ausgestaltet, um bei einer am Vorspannungsanschluss anliegenden Spannung eine Vorspannung des Photodetektors bereitzustellen. Die Vorspannung kann einen Wert von 2 mV oder kleiner, insbesondere 1 mV oder kleiner, aufweisen. Alternativ, oder ergänzend, kann die Vorspannung um einen Faktor von mindestens 100, insbesondere mindestens 200, geringer als die am Vorspannungsanschluss anliegende Spannung sein. Somit ist der Spannungsteiler auf vorteilhafte Weise ausgestaltet, um die anliegende Eingangsspannung auf eine Vorspannung in einem gewünschten Wert bzw. Wertebereich zu reduzieren, wobei zum Beispiel übliche Strom- und/oder Spannungsquellen zum Bereitstellen der Eingangsspannung und übliche Photodetektoren für die Umsetzung der elektronischen Anordnung verwendet werden können.

Die am Vorspannungsanschluss anliegende Spannung kann einen Wert von 500 mV oder kleiner, zum Beispiel 200 mV, aufweisen. So können auf vorteilhafte Weise zum Beispiel übliche Strom- und/oder Spannungsquellen zum Bereitstellen einer Spannung am Vorspannungsanschluss verwendet werden.

Gemäß einer Ausführungsform ist der Vorspannungsanschluss ferner mit dem Kathodenanschluss des Photodetektors und dem zweiten Eingang des Operationsverstärkers elektrisch verbunden.

Gemäß einer Ausführungsvariante ist der zweite Eingang des Operationsverstärkers als ein invertierender Eingang des Operationsverstärkers ausgeführt. Der invertierende Eingang kann ausgebildet sein, um ein Potential an dem zweiten Eingang des Operationsverstärkers zum Beispiel zumindest annähernd auf einen Wert eines an dem ersten Eingang des Operationsverstärkers anliegenden Potentials anzupassen und/oder zu regeln. Dadurch kann an dem zweiten Eingang des Operationsverstärkers eine virtuelle Masse erzeugbar sein. Alternativ, oder ergänzend, kann der Operationsverstärker als Teil eines Transimpedanzverstärkers ausgeführt sein. Anders ausgedrückt kann die elektronische Anordnung einen Transimpedanzverstärker, der den Operationsverstärker aufweist, umfassen.

Gemäß einer Ausführungsform umfasst die elektrische Anordnung ferner einen Gegenkopplungspfad, der den zweiten Eingang des Operationsverstärkers und den Ausgang des Operationsverstärkers elektrisch miteinander verbindet. Der Gegenkopplungspfad kann parallel zum Operationsverstärker verlaufen. Der Gegenkopplungspfad kann einen Widerstand, insbesondere zwei in Reihe geschaltete Widerstände aufweisen.

Gemäß einer Ausführungsform umfasst die elektrische Anordnung ferner einen Abzweigungspfad, der den Gegenkopplungspfad in einem Bereich zwischen den zwei in Reihe geschalteten Widerständen des Gegenkopplungspfades und den Vorspannungsanschluss elektrisch miteinander verbindet. Es ist denkbar, dass der Abzweigungspfad einen Abzweigungs-Widerstand aufweist.

Der Abzweigungspfad und optional der Gegenkopplungspfad können schalterlos ausgestaltet sein, d. h. insbesondere ohne Schaltelemente innerhalb des Abzweigungspfades und optional des Gegenkopplungspfades.

Der Transimpedanzverstärker kann den Operationsverstärker, den Gegenkopplungspfad und den Abzweigungspfad aufweisen. Der Transimpedanzverstärker kann die zwei in Reihe geschalteten Widerstände des Gegenkopplungspfades und/oder den Abzweigungs-Widerstand des Abzweigungspfades aufweisen. Durch den Gegenkopplungspfad und optional den Abzweigungspfad, insbesondere den zwei in Reihe geschalteten Widerständen des Gegenkopplungspfades und optional den Abzweigungs-Widerstand, kann auf vorteilhafte Weise ein gewünschter, hoher Verstärkungsfaktor des Operationsverstärkers bzw. des Transimpedanzverstärkers eingestellt sein.

Der Operationsverstärker und/oder der Transimpedanzverstärker kann einen Verstärkungsfaktor von mindestens $100\cdot10^6$ $\Omega$, zum Beispiel mindestens $200\cdot10^6$ $\Omega$, aufweisen. Der Verstärkungsfaktor kann unveränderlich sein.

Der Verstärkungsfaktor kann von Widerstandswerten der zwei in Reihe geschalteten Widerstände des Gegenkopplungspfades und/oder des Abzweigungs-Widerstands des Abzweigungspfades abhängen und/oder eingestellt sein. Dadurch kann auf vorteilhafte Weise sichergestellt werden, dass der von dem Photodetektor weitergeleitete Strom, d. h. ein Photostrom und/oder (Sperr-) Strom, auf gewünschte Weise verstärkt wird, sodass zum Beispiel Messungen in einem gewünschten Spannungsintervall möglich sind. Ferner kann die optionale Unveränderlichkeit des Verstärkungsfaktors vorteilhafterweise eine vereinfachte Ausführung des Operationsverstärkers bzw. Transimpedanzverstärkers zur Folge haben, wobei zum Beispiel keine Schaltelemente zum Verändern des Verstärkungsfaktors notwendig sind.

Der Operationsverstärker und/oder der Transimpedanzverstärker kann ausgestaltet sein, um einen vom Photodetektor weitergeleiteten Strom, zum Beispiel einen durch den Photodetektor erzeugten Photostrom, in einen Strom mit einer Spannung von mindestens 1 V, zum Beispiel etwa 2 V oder mehr, umzuwandeln. Der Operationsverstärker und/oder der Transimpedanzverstärker kann ferner ausgestaltet sein, um den vom Photodetektor weitergeleiteten Strom in einen Strom mit einer Spannung von maximal 5 V, zum Beispiel 3 V oder weniger, umzuwandeln. Dadurch kann der gemessene Strom auf vorteilhafte Weise verstärkt und in eine Spannung umgewandelt werden, der von üblichen Strom- und/oder Spannungsmessgeräten messbar ist, wobei die umgewandelte Spannung zum Beispiel in einem Spannungsintervall liegen kann, die durch einen Analog-Digital-Umsetzer digitalisiert werden kann.

Der Photodetektor kann ausgestaltet sein, um einen Photostrom mit einer Stromstärke von bis zu 50 nA, insbesondere bis zu 20 nA, zu erzeugen. Beispielsweise können so vorteilhafterweise übliche Photodetektoren, zum Beispiel Halbleiterdetektoren bzw. Photodioden, für die elektronische Anordnung verwendet werden.

Gemäß einer Ausführungsvariante umfasst die elektronische Anordnung ferner einen Kondensator, der zur Ausbildung eines Tiefpasses parallel zu dem Widerstand, insbesondere den zwei in Reihe geschalteten Widerständen des Gegenkopplungspfades angeordnet ist.

Gemäß einer Ausführungsform weist der Spannungsteiler einen Eingang, einen ersten Ausgang und einen zweiten Ausgang auf. Der Eingang des Spannungsteilers kann mit dem Vorspannungsanschluss elektrisch verbunden sein. Der erste Ausgang des Spannungsteilers kann mit dem Anodenanschluss des Photodetektors elektrisch verbunden sein. Es ist denkbar, dass die am ersten Ausgang des Spannungsteilers bereitgestellte Spannung um einen Faktor von mindestens 100, insbesondere mindestens 200, geringer als die am Eingang des Spannungsteilers anliegende Spannung sein kann. Somit kann der Spannungsteiler über den ersten Ausgang auf vorteilhafte Weise in der Lage sein, eine Vorspannung in einem gewünschten Wert bzw. Wertebereich bereitstellen.

Gemäß einer Ausführungsform weist der Spannungsteiler einen ersten Widerstand und einen zweiten Widerstand auf. Zwischen dem Eingang des Spannungsteilers und dem ersten Ausgang des Spannungsteilers kann der erste Widerstand angeordnet sein. Zwischen dem Eingang des Spannungsteilers und dem zweiten Ausgang des Spannungsteilers können der erste Widerstand und der zweite Widerstand angeordnet sein.

Gemäß einer Ausführungsvariante umfasst die elektronische Anordnung ferner einen Masseanschluss, der mit dem Anodenanschluss des Photodetektors und dem Vorspannungsanschluss elektrisch verbunden ist. Beispielsweise kann der zweite Ausgang des Spannungsteilers mit dem Masseanschluss elektrisch verbunden sein.

Gemäß einer Ausführungsform ist zwischen dem Ausgang des Operationsverstärkers und dem Vorspannungsanschluss eine Ausgangsspannung in zum Beispiel linearer und/oder proportionaler Abhängigkeit eines am Photodetektor anliegenden und/oder im Photodetektor erzeugten Stroms bestimmbar und/oder abgreifbar. Die Ausgangsspannung kann von einem Photostrom und/oder einem (Sperr-) Strom abhängen, zum Beispiel linear und/oder proportional. Dadurch können durch Bestimmungen von Ausgangsspannungen auf vorteilhafte Weise Rückschlüsse auf eine durch den Photodetektor erfassten Strahlung und eine Temperaturabhängigkeit des Photodetektors gezogen werden.

Am Ausgang des Operationsverstärkers und optional dem Vorspannungsanschluss kann ein Strom- und/oder Spannungsmessgerät, zum Beispiel einen Analog-Digital-Umsetzer und/oder ein Mikrocontroller, anschließbar oder angeschlossen sein. Die elektronische Anordnung kann das Strom- und/oder Spannungsmessgerät aufweisen, zum Beispiel zum Messen eines Ausgangsstroms und/oder einer Ausgangsspannung der elektronischen Anordnung.

Am Vorspannungsanschluss kann eine Strom- und/oder Spannungsquelle anschließbar oder angeschlossen sein. Die elektronische Anordnung kann die Strom- und/oder Spannungsquelle umfassen. Beispielsweise kann eine von der Strom- und/oder Spannungsquelle bereitgestellte Spannung über einen Spannungsregler und/oder Mikrocontroller einstellbar bzw. steuerbar sein.

Gemäß einer Ausführungsform kann der Photodetektor eine Photodiode sein. Der Photodetektor und/oder die Photodiode kann zumindest teilweise aus Indiumantimonid (kurz: InSb) und/oder Indiumarsenid-Antimonid (kurz: InAsSb) bestehen.

Gemäß einem weiteren allgemeinen Aspekt der Erfindung wird ein optischer Gassensor bereitgestellt. Der optische Gassensor kann zum optischen Detektieren eines Gases, zum Beispiel Kohlendioxid, insbesondere zum Bestimmen eines Gasgehalts, zum Beispiel einer Gaskonzentration, eines Gases ausgestaltet sein.

Der optischer Gassensor umfasst eine Messzelle zur Aufnahme eines Gases.

Der optischer Gassensor umfasst eine Strahlungsquelle zum Emittieren einer Strahlung in Richtung der Messzelle. Beispielsweise kann die Strahlungsquelle eine Infrarot-Strahlungsquelle zum Emittieren einer Infrarotstrahlung, insbesondere einer Strahlung im mittleren Infrarotbereich, sein. Infrarotstrahlung kann besonders vorteilhaft für das Ermitteln eines Gasgehalts, zum Beispiel eine Gaskonzentration, verwendet werden, wenn es sich bei dem Gas um Kohlendioxid handelt, da Kohlendioxid Infrarotlicht bestimmter Wellenlängen absorbiert.

Der optische Gassensor umfasst eine elektronische Anordnung wie hierin offenbart. Der Photodetektor der elektronischen Anordnung ist zur Detektion von zumindest einem Teil der Strahlung, die die Messzelle und das in der Messzelle aufgenommene Gas durchtreten hat, angeordnet.

Somit kann die elektronische Anordnung wie hierin offenbart auf vorteilhafte Weise zum optischen Detektieren eines Gases, das sich in der Messzelle befindet, genutzt werden. Das optische Detektieren kann dabei mittels des optischen Gassensors auf einfache Weise durch das Erfassen der Strahlung mittels des Photodetektors und der Messung bzw. Auswertung von Ausgangsspannungen der elektronischen Anordnung erfolgen, wobei zum Beispiel der Gasgehalt bzw. die Gaskonzentration des Gases ermittelt werden kann.

Gemäß einer Ausführungsform kann die Messzelle zumindest abschnittsweise zwischen der Strahlungsquelle und dem Photodetektor der elektronischen Anordnung, und/oder zwischen der Strahlungsquelle und der elektronischen Anordnung angeordnet sein.

Die Messzelle kann zumindest eine Außenöffnung zum Eintreten des Gases aus einer Umgebung des optischen Gassensors aufweisen.

Gemäß einem weiteren allgemeinen Aspekt der Erfindung wird ein Verfahren zum Bestimmen eines Photostroms unter Berücksichtigung einer Temperaturabhängigkeit bereitgestellt.

Das Verfahren wird mittels einer elektronischen Anordnung wie hierin offenbart und/oder einem optischen Gassensor wie hierin offenbart ausgeführt.

Das Verfahren umfasst ein Bereitstellen einer Vorspannung des Photodetektors durch Anlegen einer Spannung am Vorspannungsanschluss.

Das Verfahren umfasst ein Bestimmen einer ersten Ausgangsspannung der elektrischen Anordnung und/oder des optischen Gassensors bei bereitgestellter Vorspannung. Der Photodetektor wird nicht von einer Strahlung bestrahlt und/oder eine Strahlungsquelle zum Emittieren einer Strahlung, zum Beispiel die Strahlungsquelle des optischen Gassensors, ist deaktiviert.

Das Verfahren umfasst ein Bestimmen einer zweiten Ausgangsspannung der elektrischen Anordnung und/oder des optischen Gassensors bei bereitgestellter Vorspannung. Der Photodetektor wird von einer Strahlung bestrahlt und/oder die Strahlungsquelle ist aktiviert.

Somit können die elektronische Anordnung und der optische Gassensor wie hierin offenbart auf vorteilhafte Weise zum Bestimmen eines Photostroms unter Berücksichtigung einer Temperaturabhängigkeit verwendet werden, ohne dass Änderungen von Konfigurationen bzw. Messmodi der elektronischen Anordnung notwendig sind. Stattdessen ist es ausreichend, Messungen ohne Bestrahlung des Photodetektors und mit Bestrahlung des Photodetektors durchzuführen. Dazu kann das Deaktivieren und anschließende Aktivieren (oder umgekehrt) einer Strahlungsquelle ausreichend sein, um die erste Ausgangsspannung, die lediglich von einem durch eine eingelegte Vorspannung erzeugten (Sperr-) Strom abhängt, und die zweite Ausgangsspannung, die von dem (Sperr-) Strom und dem durch die erfasste Strahlung erzeugten Photostrom abhängt, zu bestimmen.

Gemäß einer Ausführungsform kann das Verfahren mittels des optischen Gassensors ausgeführt werden, wobei ein Gasgehalt, zum Beispiel eine Gaskonzentration eines Gases, innerhalb der Messzelle aus einer Differenz der zweiten Ausgangsspannung und ersten Ausgangsspannung bestimmt werden kann.

Die Differenz kann linear und/oder proportional von einem Photostrom des Photodetektors und damit einer durch den Photodetektor erfassten Strahlung und/oder Strahlungsintensität abhängen. Auf vorteilhafte Weise ist es somit möglich, alleine anhand der bestimmten Ausgangsspannungen Rückschlüsse auf ein Gas in der Umgebung des Photodetektors bzw. der elektronischen Anordnung, d. h. innerhalb der Messzelle, zu schließen. Ein optisches Detektieren eines Gases kann somit mittels des optischen Gassensors auf einfache Weise erfolgen, wobei der Gasgehalt bzw. die Gaskonzentration durch eine einfache Bestimmung der Differenz der bestimmten Ausgangsspannungen ermittelt werden kann.

Gemäß einer Ausführungsform kann ein Beginn des Bereitstellens der Vorspannung, insbesondere vor dem Bestimmen der ersten Ausgangsspannung der zweiten Ausgangsspannung, eine Einschaltphase darstellen, wobei der durch den Kondensator gebildete Tiefpass eine, insbesondere langsame, Zeitkonstante verursacht.

Die erste Ausgangsspannung kann, zum Beispiel linear und/oder proportional, von einem (Sperr-) Strom des Photodetektors abhängen. Die zweite Ausgangsspannung kann, zum Beispiel linear und/oder proportional, von einer Summe eines Photostroms und eines (Sperr- ) Stroms des Photodetektors abhängen.

Das Bestimmen der ersten Ausgangsspannung und das Bestimmen der zweiten Ausgangsspannung können nacheinander innerhalb von weniger als zwei Sekunden, insbesondere weniger als eine Sekunde, durchgeführt werden.

Die erste Ausgangsspannung und die zweite Ausgangsspannung können zwischen dem Ausgang des Operationsverstärkers und dem Vorspannungsanschluss bestimmt und/oder abgegriffen werden.

Zur Vermeidung von Wiederholungen sollen zuvor rein vorrichtungsgemäß offenbarte Merkmale (bzgl. der elektronischen Anordnung und/oder des optischen Gassensors) auch als verfahrensgemäß offenbart gelten und beanspruchbar sein und umgekehrt.

Die zuvor beschriebenen Ausführungsformen, Ausführungsvarianten und Merkmale der Erfindung sind beliebig miteinander kombinierbar. Weitere Merkmale und Vorteile der Erfindung ergeben sich aus der nachfolgenden Beschreibung sowie aus den beigefügten Zeichnungen, auf die Bezug genommen wird. In den Zeichnungen zeigen:

Fig. 1 eine elektronische Anordnung gemäß einer Ausführungsform der Erfindung in einer schematischen Draufsicht,

Fig. 2 ein Gassensor mit der elektronischen Anordnung gemäß einer Ausführungsform der Erfindung in einer schematischen Draufsicht,

Fig. 3 ein Verfahrensablauf eines Verfahrens gemäß einer Ausführungsform der Erfindung,

Fig. 4 ein beispielhafter Verlauf einer Ausgangsspannung im Laufe des Verfahrens, und

Fig. 5 beispielhafte Verläufe eines durch den Photodetektor der elektronischen Anordnung fließenden (Sperr-) Stroms in Abhängigkeit von einer Temperatur des Photodetektors bei verschiedenen Vorspannungen,

Fig. 6 beispielhafte Verläufe von "Quasi"-Signalen des Photodetektors in Abhängigkeit von einer Vorspannung des Photodetektors, und

Fig. 7 beispielhafte Verläufe der Ausgangsspannungen in Abhängigkeit von einer Temperatur des Photodetektors.

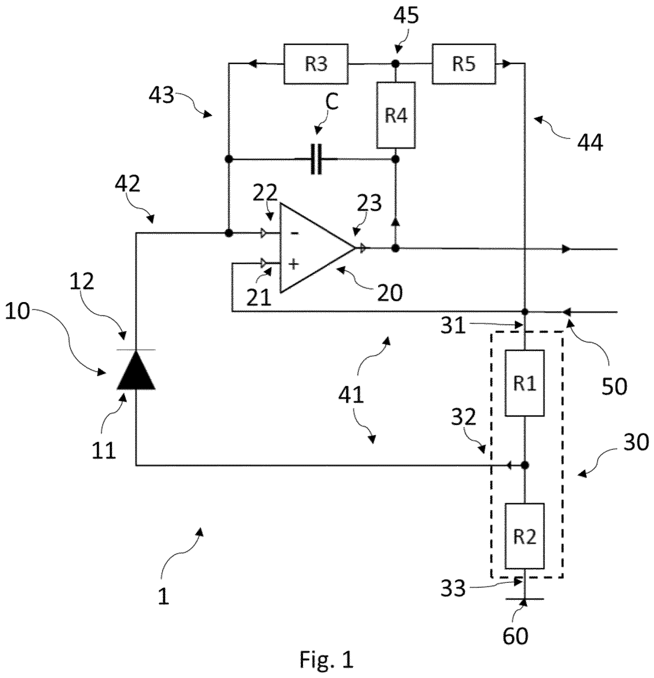

Figur 1 zeigt schematisch eine elektronische Anordnung 1 zum Bestimmen eines Photostroms unter Berücksichtigung einer Temperaturabhängigkeit gemäß einer Ausführungsform der Erfindung.

Die elektronische Anordnung 1 umfasst einen Photodetektor 10, der einen Anodenanschluss 11 und einen Kathodenanschluss 12 aufweist. Der Photodetektor 10 kann zweckmäßig als Photodiode ausgebildet sein und zum Beispiel ein Halbleiterdetektor sein, der zumindest teilweise aus InSb und/oder InAsSb besteht. Dadurch kann der Photodetektor 10 ausgestaltet sein, um insbesondere Infrarotlicht detektieren zu können.

Die elektronische Anordnung 1 umfasst einen Operationsverstärker 20, der einen ersten Eingang 21, einen zweiten Eingang 22 und einen Ausgang 23 aufweist. Der zweite Eingang 22 kann zum Beispiel als ein invertierender Eingang des Operationsverstärkers 20 ausgeführt sein.

Der Operationsverstärker 20 und der Photodetektor 10 sind zweckmäßig elektrisch miteinander verbunden. Hierzu ist vorgesehen, dass der Anodenanschluss 11 des Photodetektors 10 und der erste Eingang 21 des Operationsverstärkers 20 über einen ersten Pfad 41 elektrisch miteinander verbunden sind und der Kathodenanschluss 12 des Photodetektors 10 und der zweite Eingang 22 des Operationsverstärkers 20 über einen zweiten Pfad 42 elektrisch miteinander verbunden sind.

Die elektronische Anordnung 1 umfasst ferner einen Vorspannungsanschluss 50, der zum Anlegen einer Eingangsspannung über den ersten Pfad 41 mit dem Anodenanschluss 11 des Photodetektors 10 und dem ersten Eingang 21 des Operationsverstärkers 20 elektrisch verbunden ist.

Der Spannungsteiler 30 ist ausgestaltet, um bei einer am Vorspannungsanschluss 50 anliegenden Spannung eine Vorspannung des Photodetektors 10 bereitzustellen. So kann auch ohne Bestrahlung des Photodetektors 10 ein (Sperr-) Strom durch den Photodetektor 10 fließen.

Die Vorspannung kann einen Wert von 2 mV oder kleiner, insbesondere 1 mV oder kleiner, aufweisen, und/oder um einen Faktor von mindestens 100, insbesondere mindestens 200, geringer als die am Vorspannungsanschluss 50 anliegende Spannung sein. So kann der Vorspannungsanschluss 50 zum Beispiel durch eine übliche Strom- und/oder Spannungsquelle mit einem elektrischen Strom beaufschlagt sein, wobei dieser elektrische Strom eine Spannung von 500 mV oder kleiner, zum Beispiel in einem Bereich von 150 mV bis 200 mV, aufweisen kann.

Die elektronische Anordnung 1 umfasst ferner einen Spannungsteiler 30, der innerhalb des ersten Pfades 41 zwischen dem Anodenanschluss 11 des Photodetektors 10 und dem Vorspannungsanschluss 50 angeordnet ist. Die Spannungsteiler 30 dient dazu, die am Vorspannungsanschluss 50 anliegende Eingangsspannung entlang des Pfades 41 in Richtung des Photodetektors 10 auf die gewünschte Vorspannung zu reduzieren bzw. zu teilen.

Der Spannungsteiler 30 weist in der gezeigten Ausführungsform einen Eingang 31, einen ersten Ausgang 32 und einen zweiten Ausgang 33 auf. Der Eingang 31 des Spannungsteilers 30 ist mit dem Vorspannungsanschluss 50 elektrisch verbunden und der erste Ausgang 32 des Spannungsteilers 30 ist mit dem Anodenanschluss 11 des Photodetektors 10 elektrisch verbunden. Die am ersten Ausgang 32 des Spannungsteilers 30 bereitgestellte Spannung ist zum Beispiel um einen Faktor von mindestens 100, insbesondere mindestens 200, geringer als die am Eingang 31 des Spannungsteilers 30 anliegende Spannung.

Der Spannungsteiler 30 weist einen ersten Widerstand R1 und einen zweiten Widerstand R2 auf. Zwischen dem Eingang 31 des Spannungsteilers 30 und dem ersten Ausgang 32 des Spannungsteilers 30 ist der erste Widerstand R1 angeordnet und zwischen dem Eingang 31 des Spannungsteilers 30 und dem zweiten Ausgang 33 des Spannungsteilers 30 sind der erste Widerstand R1 und der zweite Widerstand R2 angeordnet.

Die elektronische Anordnung 1 umfasst ferner einen Masseanschluss 60, der mit dem Anodenanschluss 11 des Photodetektors 10 und dem Vorspannungsanschluss 50 elektrisch verbunden ist, wobei der zweite Ausgang 33 des Spannungsteilers 30 mit dem Masseanschluss 60 elektrisch verbunden ist.

Der Operationsverstärker 20 ist insbesondere ein spannungsgesteuerte Operationsverstärker und als Teil eines Transimpedanzverstärkers ausgeführt. Entsprechend umfasst die elektrische Anordnung 1 bzw. der Transimpedanzverstärker eine Rückkopplung in Form eines Gegenkopplungspfades 43, der den zweiten Eingang 22 des Operationsverstärkers 20 und den Ausgang 23 des Operationsverstärkers 20 elektrisch miteinander verbindet. Dieser Gegenkopplungspfad 43 weist als Widerstand zwei in Reihe geschaltete Widerstände R3, R4 auf.

Darüber hinaus umfasst die elektrische Anordnung 1 bzw. der Transimpedanzverstärker ferner einen Abzweigungspfad 44, der den Gegenkopplungspfad 43 in einem Bereich 45 zwischen den zwei in Reihe geschalteten Widerständen R3, R4 und den Vorspannungsanschluss 50 elektrisch miteinander verbindet. Der Abzweigungspfad 44 weist einen Abzweigungs-Widerstand R5 auf.

So ist der Vorspannungsanschluss 50 nicht nur mit dem Anodenanschluss 11 des Photodetektors 10 und dem ersten Eingang 21 des Operationsverstärker 20 elektrisch verbunden, sondern ist über den Gegenkopplungspfad 43 und den Abzweigungspfad 44 ferner mit dem Kathodenanschluss 12 des Photodetektors 10 und dem zweiten Eingang 22 des Operationsverstärkers 20 elektrisch verbunden.

Dabei sind der Gegenkopplungspfad 43 und der Abzweigungspfad 44 zweckmäßig schalterlos ausgestaltet, d. h. im Gegenkopplungspfad 43 und im Abzweigungspfad 44 sind insbesondere keine Schaltelemente vorgesehen, sodass feste elektrische Verbindungen bereitgestellt werden.

Der Gegenkopplungspfad 43 und der Abzweigungspfad 44, einschließlich der Widerstände R3, R4 und R5, bilden zusammen mit dem Operationsverstärker 20 den Transimpedanzverstärker. Dieser Transimpedanzverstärker kann einen Verstärkungsfaktor G von mindestens $100 \cdot 10^6$ Ω, zum Beispiel $200 \cdot 10^6$ Ω oder höher, aufweisen, wobei der Verstärkungsfaktor von den Widerstandswerten der Widerstände R3, R4 und R5 abhängt:

$$G = R_3 \cdot \left(1 + \frac{R_4}{R_5}\right) + R_4.$$

Die elektronische Anordnung 1 umfasst in der gezeigten Ausführungsform ferner einen Kondensator C, der zur Ausbildung eines Tiefpasses parallel zu den zwei in Reihe geschalteten Widerständen R3, R4 des Gegenkopplungspfades 43 angeordnet ist.

Im Vergleich zum Stand der Technik aus der EP 3 581 898 A1 weist die in Figur 1 gezeigte Ausführungsform der elektronischen Anordnung 1 somit insbesondere keine Schaltelemente auf. Anstelle von zwei Schaltelementen, die in der EP 3 581 898 A1 verwendet werden, um einen Anodenanschluss einer Photodiode selektiv im Photostrommessmodus mit einem ersten Eingang eines Operationsverstärkers und mit einem ersten Vorspannungsanschluss zu verbinden und im Temperaturmessmodus mit einem Masseanschluss zu verbinden, umfasst die erfindungsgemäße elektronische Anordnung 1 den Spannungsteiler 30. Der Spannungsteiler 30 ist entsprechend nicht ausgestaltet, um die elektrische Verbindung zum Anodenanschluss 11 des Photodetektors 10 wahlweise zu trennen bzw. umzuschalten, sondern stellt sicher, dass über den Vorspannungsanschluss 50 eine ständige, ausreichend geringe Vorspannung des Photodetektors 10 bereitgestellt werden kann.

Ferner ist, anstelle eines Schaltelements, das in der EP 3 581 898 A1 verwendet wird, um einen Gegenkopplungspfad selektiv im Photostrommessmodus mit einem zweiten Vorspannungsanschluss zu verbinden und im Temperaturmessmodus vom zweiten Vorspannungsanschluss zu trennen, der Gegenkopplungspfad 43 und der Abzweigungspfad 44 der erfindungsgemäßen elektronischen Anordnung 1 schalterlos ausgebildet.

Dabei ist insbesondere der Abzweigungspfad 44 fest mit dem Vorspannungsanschluss 50 verbunden, sodass ein unveränderlicher Verstärkungsfaktor des Operationsverstärkers 20 bzw. des Transimpedanzverstärkers bereitgestellt wird, während der Verstärkungsfaktor des Transimpedanzverstärkers in der EP 3 581 898 A1 im Temperaturmessmodus durch das elektrische Trennen des Gegenkopplungspfades und des zweiten Vorspannungsanschlusses reduziert wird.

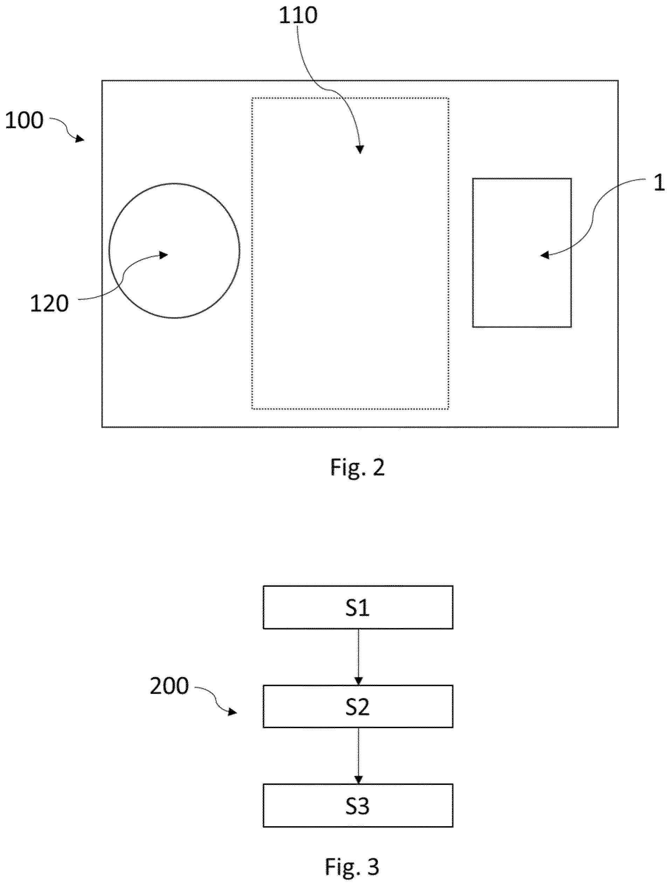

Figur 2 zeigt schematisch einen optischen Gassensor 100 gemäß einer Ausführungsform, wobei der optische Gassensor 100 die elektronische Anordnung 1 umfasst.

Der optische Gassensor 100 umfasst ferner eine Messzelle 110 zur Aufnahme eines Gases. Die Messzelle 110 kann zum Beispiel zumindest eine Außenöffnung zum Eintreten des Gases aus einer Umgebung des optischen Gassensors 100 aufweisen.

Der optische Gassensor 100 umfasst ferner eine Strahlungsquelle 120 zum Emittieren einer Strahlung in Richtung der Messzelle 110. Insbesondere kann die Strahlungsquelle 120 eine Infrarot-Strahlungsquelle zum Emittieren einer Infrarotstrahlung, insbesondere einer Strahlung im mittleren Infrarotbereich, sein.

Der Photodetektor 10 der elektronischen Anordnung 1 ist zur Detektion von zumindest einem Teil der Strahlung, die die Messzelle 110 durchtreten hat, angeordnet, wobei die Messzelle 110 zum Beispiel zumindest abschnittsweise zwischen der Strahlungsquelle 120 und dem Photodetektor 10 bzw. der elektronischen Anordnung 1 angeordnet sein kann.

Auf diese Weise kann der optische Gassensor 100 zweckmäßig zum optischen Detektieren des Gases (zum Beispiel Kohlendioxid) in der Messzelle 110 ausgestaltet sein. Insbesondere kann anhand der Detektion des zumindest einen Teils der Strahlung, die die Messzelle 110 und das Gas durchtreten hat, ein Gasgehalt, zum Beispiel eine Gaskonzentration, des Gases in der Messzelle 110 bestimmbar sein, wobei die detektierbare Intensität der Strahlung, welche den Photodetektor 10 erreicht und nicht durch das Gas in der Messzelle 110 absorbiert und/oder reflektiert wird, von der Art des Gases und dem Gasgehalt abhängt.

So erzeugt die durch den Photodetektor 10 erfasste Strahlung auf Basis des inneren photoelektrischen Effekts einen Photostrom, dessen Höhe, Stromstärke, von der Strahlungsintensität dieser erfassten Strahlung abhängt. Der Photostrom kann nach einer Verstärkung durch den Operationsverstärker 20 zum Beispiel zwischen dem Ausgang 23 des Operationsverstärkers 20 und dem Vorspannungsanschluss 50 abgegriffen werden.

In Figur 3 ist ein beispielhaftes Verfahren 200 zum Bestimmen eines Photostroms unter Berücksichtigung einer Temperaturabhängigkeit dargestellt, wobei das Verfahren 200 insbesondere zumindest teilweise mittels der elektronischen Anordnung 1 und/oder dem optischen Gassensor 100 ausgeführt werden kann.

In einem ersten Verfahrensschritt S1 wird eine Vorspannung des Photodetektors 10 durch Anlegen einer Spannung am Vorspannungsanschluss 50 bereitgestellt.

Der erste Verfahrensschritt S1 kann eine Einschaltphase darstellen, wobei zum Beispiel der durch den Kondensator C gebildete Tiefpass bereits von Beginn des Verfahrens 200 eine langsame Zeitkonstante verursachen kann.

In einem zweiten Verfahrensschritt S2 wird eine erste Ausgangsspannung der elektrischen Anordnung 1 und/oder des optischen Gassensors 100 bei bereitgestellter Vorspannung bestimmt, wobei der Photodetektor 10 nicht von einer Strahlung bestrahlt wird und/oder die Strahlungsquelle 120 zum Emittieren einer Strahlung deaktiviert ist.

Es wird somit im zweiten Verfahrensschritt S2 kein Photostrom durch ein Erfassen einer Strahlung erzeugt. Stattdessen fließt lediglich ein durch die Vorspannung erzeugter (Sperr-) Strom durch den Photodetektor 10. Die erste Ausgangsspannung kann entsprechend, zum Beispiel linear und/oder proportional, von dem (Sperr-) Strom des Photodetektors 10 abhängen.

In einem dritten Verfahrensschritt S3 wird eine zweite Ausgangsspannung der elektrischen Anordnung 1 und/oder des optischen Gassensors 100 bei bereitgestellter Vorspannung bestimmt, wobei der Photodetektor 10 von einer Strahlung bestrahlt wird und/oder die Strahlungsquelle 120 aktiviert ist.

Durch die Bestrahlung wird der Photostrom und somit ein elektrisches Signal in der Größenordnung von mehreren Nanoampere, zum Beispiel etwa 10 nA, erzeugt. Der Photostrom (in Summe mit dem (Sperr-) Strom) wird über den zweiten Pfad 42 weitergeleitet und wiederum durch den Operationsverstärker 20 bzw. den Transimpedanzverstärker mit einem hohen Verstärkungsfaktor von zum Beispiel $200 \cdot 10^6 \, \Omega$ verstärkt und in einen Strom mit einer Spannung in der Größenordnung von zum Beispiel etwa 2 V umgewandelt.

Es fließt somit im dritten Verfahrensschritt S3 eine Summe des erzeugten Photostroms und des (Sperr-) Stroms durch den Photodetektor 10. Die zweite Ausgangsspannung hängt entsprechend, zum Beispiel linear, von einer Summe des Photostroms und des (Sperr-) Stroms des Photodetektors 10 ab.

Die erste Ausgangsspannung und die zweite Ausgangsspannung können zwischen dem Ausgang 23 des Operationsverstärkers 20 und dem Vorspannungsanschluss 50 bestimmt und/oder abgegriffen werden.

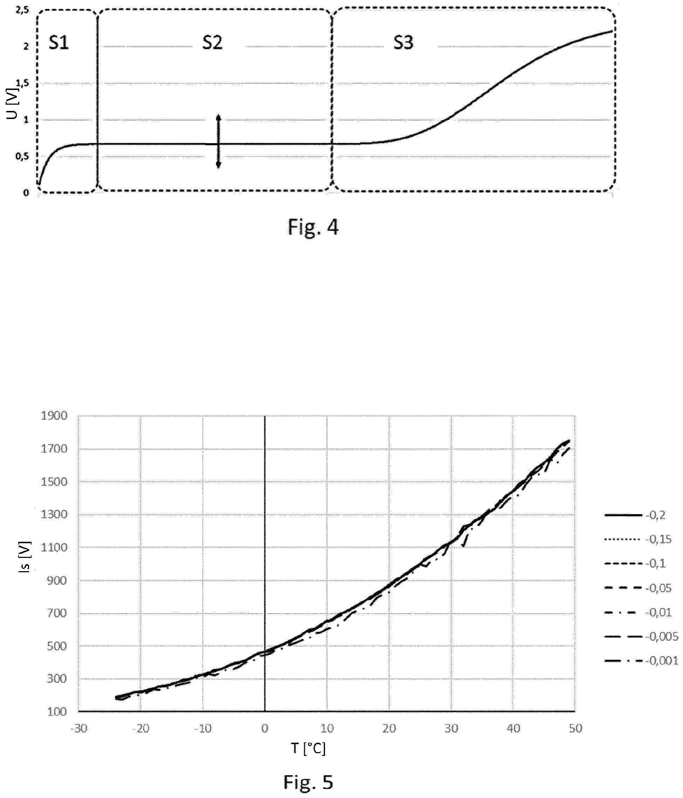

Figur 4 stellt einen beispielhaften Verlauf einer Ausgangsspannung U im Laufe des Verfahrens 200 dar. In der Einschaltphase des ersten Verfahrensschritts S1 steigt die Ausgangsspannung U bis zur ersten Ausgangsspannung, also dem temperaturabhängigen (Sperr-) Strom an, wobei von Anfang an die hohe Verstärkung durch den Operationsverstärker 20 bzw. den Transimpedanzverstärker aktiv ist und optional die langsame Zeitkonstante durch den Tiefpass erkennbar wirkt.

Nach der Einschaltphase kann nunmehr die erste Ausgangsspannung im zweiten Verfahrensschritt S2 bestimmt werden, wobei der Photodetektor 10 nicht bestrahlt bzw. keine Strahlungsquelle aktiv ist.

Schließlich wird der Photodetektor 10 im dritten Verfahrensschritt S3 bestrahlt bzw. eine Strahlungsquelle aktiviert, was zu einem Anstieg der Ausgangsspannung U bis zum Erreichen eines weiteren Plateaus, nämlich der zweiten Ausgangsspannung, führt.

Anders als der Stand der Technik in der EP 3 581 898 A1 ist somit zwischen den beiden Verfahrensschritten S2 und S3 keine Umschaltung zwischen verschiedenen Messmodi notwendig. Insbesondere ist es nicht notwendig, im dritten Verfahrensschritt S3 die Vorspannung wieder zu deaktivieren und einen Quasikurzschluss des Photodetektors 10 herzustellen.

In der elektronischen Anordnung 1 kann so auf Schaltelemente verzichtet werden. Insbesondere kann der Anodenanschluss 11, der erste Eingang 21 des Operationsverstärkers 20 und der Vorspannungsanschluss 50 fest und/oder schalterlos elektrisch miteinander verbunden sein. Anders ausgedrückt, innerhalb des ersten Pfades 41 bzw. zwischen dem Anodenanschluss 11, dem ersten Eingang 21 des Operationsverstärkers 20 und dem Vorspannungsanschluss 50 sind insbesondere keine Schaltelemente vorgesehen.

Ferner kann u. a. der Gegenkopplungspfad 43 und damit die Gegenkopplung des Operationsverstärkers 20 bzw. des Transimpedanzverstärkers über den Abzweigungspfad 44 fest mit dem Vorspannungsanschluss 50 elektrisch verbunden sein, wobei insbesondere der Abzweigungspfad 44 schalterlos ausgebildet sein kann. Darüber hinaus ist denkbar, dass die gesamte elektronische Anordnung 1 schalterlos, d. h. ohne Schaltelemente, ausgebildet sein kann.

Stattdessen können die beiden Verfahrensschritte S2 und S3 nacheinander im gleichen Messmodus, d. h. bei anliegender, gleicher Vorspannung, erfolgen. Auch eine Veränderung des Verstärkungsfaktors durch den Operationsverstärker 20 bzw. den Transimpedanzverstärker ist, anders als in der EP 3 581 898 A1 (in welcher der Verstärkungsfaktor im Temperaturmessmodus im Vergleich zum Photostrommodus um einen Faktor von etwa 700 reduziert ist), nicht erforderlich, sodass der Verstärkungsfaktor unveränderlich sein kann.

Die notwendige Reduzierung der an dem Vorspannungsanschluss 50 anliegenden Spannung, um eine ausreichend geringe Vorspannung des Photodetektors 10 bereitzustellen, wird durch den Spannungsteiler 30 gewährleistet.

Die ausreichend geringe Vorspannung, die zum Beispiel im Bereich von bis zu 2 mV liegt, kann so durch die geeignete Wahl der beiden Widerstände R1 und R2 des Spannungsteiler 30 erzielt werden. Rein beispielhaft kann bei einer am Vorspannungsanschluss 50 anliegenden Spannung von 200 mV, die zum Beispiel von einem üblichen Mikrocontroller eingestellt bzw. gesteuert wird, eine Vorspannung von etwa 0,5 mV durch eine Wahl von R1 = 2,43 kOhm und R2 = 1 MOhm erreicht werden:

$$U = 200\,\text{mV} \cdot \left(\frac{R_1}{R_1 + R_2}\right) \sim 0.5\,\text{mV}.$$

Überraschenderweise verhält sich der Photodetektor 10 bei solch geringen Vorspannungen wie ein ohmscher Widerstand, d. h. die Spannung und Stromstärke sind im Wesentlichen linear voneinander abhängig. Nichtlinearitäten, die dem speziellen Aufbau des Photodetektors 10 geschuldet sind, treten erst bei höheren Spannungen auf.

Ferner ist die Temperaturabhängigkeit qualitativ in diesen geringen Spannungsbereichen unabhängig von der anliegenden Spannung. Anders ausgedrückt, der temperaturabhängige (Sperr-) Strom des Photodetektors 10 ist im Wesentlichen unabhängig von der geringen Vorspannung, sodass Sperrstromverläufe in Abhängigkeit von der Temperatur für verschiedene Vorspannungen im Wesentlichen identisch verlaufen.

So zeigt Figur 5 beispielhafte Verläufe eines durch den Photodetektor 10 fließenden (bei 25°C auf 1000 normierten) Sperrstroms Is in Abhängigkeit von der Temperatur T des Photodetektors bei verschiedenen Vorspannungen von 0,001 V (d. h. 1 mV) bis 0,2 V (d. h. 200 mV). Wie zu erkennen ist, sind die Verläufe im Wesentlichen identisch und sind somit qualitativ unabhängig von den geringen Vorspannungen. Geringe Schwankungen der am Vorspannungsanschluss 50 anliegenden Spannung und damit der Vorspannung haben daher keinen wesentlichen Einfluss auf die Temperaturabhängigkeit. Somit ist die Temperaturmessung, d. h. die Bestimmung des temperaturabhängigen (Sperr-) Stroms (auch: Ruhestrom) bzw. der vom (Sperr-) Strom abhängigen ersten Ausgangsspannung im zweiten Verfahrensschritt S2 bei geringer Vorspannung durchführbar.

Des Weiteren ist der Photostrom Ip zumindest in dem zuvor genannten geringen Vorspannungsbereich im Wesentlichen unabhängig von der anliegenden Vorspannung bzw. dem erzeugten (Sperr-) Strom, bzw. diese Abhängigkeit ist zumindest vernachlässigbar klein. Anders ausgedrückt haben geringe Vorspannungen keinen bzw. einen unwesentlichen Einfluss auf die Höhe und den Verlauf des durch den Photodetektor 10 erzeugten Photostroms Ip bei einer Bestrahlung des Photodetektors 10.

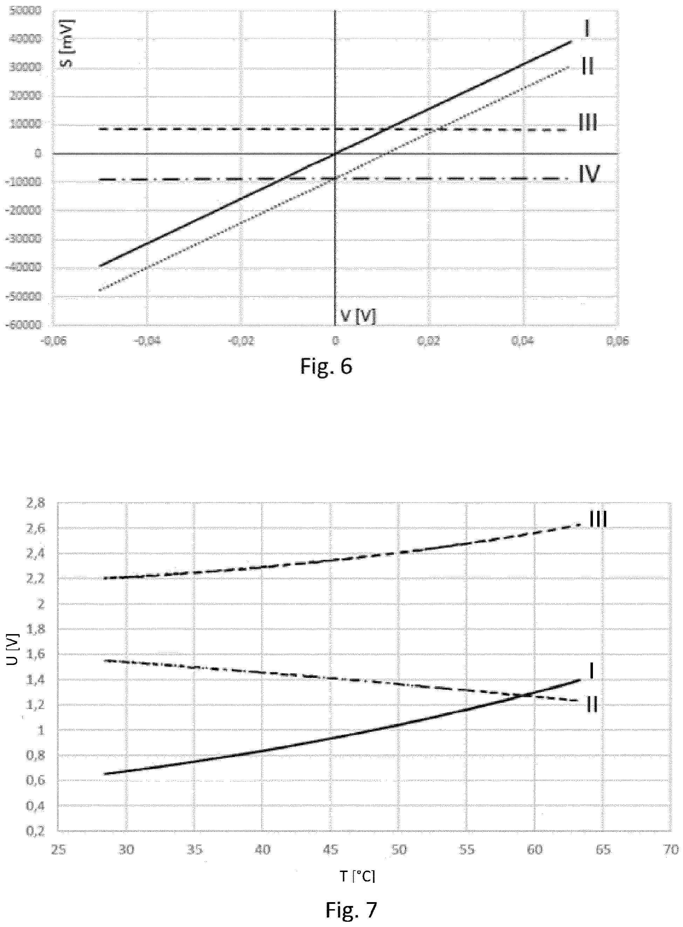

So zeigt Figur 6 beispielhafte Verläufe von "Quasi"-Signalen S, die den Photodetektor 10 während der beiden Verfahrensschritte S2 und S3 verlassen, in Abhängigkeit von der Vorspannung V des Photodetektors 10, wobei die bestimmten Ausgangsspannungen von diesen "Quasi"-Signalen S nach der Verstärkung durch den Operationsverstärker 20 abhängen. Verlauf I entspricht dem temperaturabhängigen (Sperr-) Strom durch den Photodetektor 10 bei Anliegen einer Vorspannung ohne Bestrahlung des Photodetektors 10, während Verlauf II dem Strom durch den Photodetektor 10 entspricht, bei dem der Photodetektor 10 zusätzlich bestrahlt wird. Verlauf II umfasst somit die zusätzliche Komponente des Photostroms, was zu einer Verschiebung des Verlaufs I führt.

Die beiden Verläufe I und II zeigen das zuvor erwähnte Verhalten des Photodetektors 10 wie ein ohmscher Widerstand, d. h. in dem dargestellten niedrigen Vorspannungsbereich weisen die beiden Verläufe I und II ein im Wesentlichen lineares Verhalten zwischen der Vorspannung und der entsprechenden Stromstärke der "Quasi"-Signale auf.

Verlauf III entspricht der Differenz aus den Verläufen II und I und damit dem reinen Photostrom, ohne dem Anteil durch den temperaturabhängen (Sperr-) Strom. Wie zu erkennen ist, ist der reine Photostrom im Wesentlichen unabhängig von einer anliegenden niedrigen Vorspannung und verläuft somit in Abhängigkeit von der Vorspannung im Wesentlichen horizontal. Untersuchungen haben gezeigt, dass diese Abhängigkeit zum Beispiel mit 0,005 % / mV der Vorspannung äußerst gering ausfällt. Als Referenz zeigt Verlauf IV rein beispielhaft auch die Differenz aus den Verläufen I und II (und damit die Inverse des Verlauf III), welche entsprechend ebenfalls keine wesentliche Abhängigkeit von der Vorspannung aufweist.

Der tatsächliche Photostrom, d. h. der aufgrund der Bestrahlung vom Photodetektor 10 erzeugte Strom, kann so zum Beispiel durch eine einfache Differenz zwischen der bestimmten zweiten Ausgangsspannung und der bestimmten ersten Ausgangsspannung ermittelt werden. Die Photostrommessung ist somit auch trotz der anliegenden, geringen Vorspannung durchführbar, sodass es, im Gegensatz zum Stand der Technik aus der EP 3 581 898 A1, nicht notwendig ist, den Messmodus zwischen den beiden Verfahrensschritten S2 und S3 zu ändern. Dabei kann insbesondere die am Vorspannungsanschluss 50 anliegende Spannung während beiden Messungen unverändert bleiben.

In der Praxis können der zweite Verfahrensschritt S2 und der dritte Verfahrensschritt S3 nacheinander innerhalb von weniger als zwei Sekunden, insbesondere weniger als eine Sekunde, zum Beispiel 0,6 Sekunden, durchgeführt werden. Daher kann davon ausgegangen werden, dass in dieser kurzen Zeit keine raschen Temperaturwechsel die Bestimmungen verfälschen.

Zum Bestimmen des Photostroms bzw. einer lediglich vom Photostrom abhängigen Ausgangsspannung kann das Verfahren 200 ferner umfassen, eine Differenz der zweiten Ausgangsspannung und ersten Ausgangsspannung zu bestimmen. Die Differenz kann zum Beispiel linear und/oder proportional von dem Photostrom des Photodetektors 10 und/oder einer durch den Photodetektor 10 erfassten Strahlungsintensität abhängen.

Wird das Verfahren 200 mittels des optischen Gassensors 100 ausgeführt, so kann ein Gasgehalt, zum Beispiel eine Gaskonzentration, innerhalb der Messzelle 110 aus der Differenz der zweiten Ausgangsspannung und ersten Ausgangsspannung bestimmt werden. Handelt es sich bei dem zu messenden Gas um Kohlendioxid, so kann insbesondere eine Infrarot-Strahlungsquelle als Strahlungsquelle 120 verwendet werden, da Kohlendioxid zumindest einen Teil der Infrarotstrahlung für bestimmte Wellenlängen, insbesondere im mittleren Infrarotbereich, absorbiert. Je nach Gaskonzentration erreicht mehr oder weniger Infrarotstrahlung den Photodetektor 10, sodass entsprechend auch ein höherer oder niedrigerer Photostrom erzeugt wird. Die Differenz der zweiten Ausgangsspannung und der ersten Ausgangsspannung kann daher zur Konzentrationsbestimmung des Gases verwendet werden.

Hinsichtlich der Bestimmungen bzw. Messungen der Ausgangsspannungen kann die elektronische Anordnung 1 ein Strom- und/oder Spannungsmessgerät, zum Beispiel einen Analog-Digital-Umsetzer (engl. "analog-to-digital converter", ADC), umfassen. Besonderes Augenmerk kann hierbei auf einen ADC-Bereich, zum Beispiel ein Spannungsintervall bis 2,8 V, gelegt werden, also auf einen Bereich, der durch den Analog-Digital-Umsetzer digitalisiert werden kann.

Aufgrund der Charakteristik des Photodetektors 10, insbesondere wenn dieser ein Infrarotdetektor auf Halbleiterbasis (zum Beispiel InSb bzw. InAsSb) ist, erhöht sich bei steigender Temperatur der temperaturabhängige (Sperr-) Strom und damit das (Sperr-) Stromniveau. Gleichzeitig verringert sich aber auch der Photostrom und damit das Spannungs-Niveau im bestrahlten Zustand, da die Photosensitivität mit steigender Temperatur abnimmt.

So zeigt Figur 7 beispielhafte Verläufe der Ausgangsspannungen U in Abhängigkeit von der Temperatur T. Verlauf I entspricht der ersten Ausgangsspannung, die mit steigender Temperatur ansteigt.

Verlauf II entspricht dem Anteil der zweiten Ausgangsspannung, die lediglich auf den Photostrom zurückzuführen ist. Wie zu erkennen ist, verringert sich diese, im Gegensatz zur lediglich vom (Sperr-) Strom abhängigen ersten Ausgangsspannung, mit steigender Temperatur. Dies führt dazu, dass die gesamte zweite Ausgangsspannung, die durch den Verlauf **III** dargestellt ist und sich aus der Summe der beiden Verläufe I und II ergibt, wie der Verlauf I ebenfalls mit steigender Temperatur ansteigt, jedoch wesentlich weniger stark.

Dadurch wird erreicht, dass die Ausgangsspannung innerhalb des relevanten Temperaturbereichs in einem Spannungsbereich (zum Beispiel bis 2,8 V) verbleibt, die von dem entsprechenden Analog-Digital-Umsetzer digitalisiert werden kann. So kann zum Beispiel durch eine geschickte Wahl der Bauteile der elektronischen Anordnung 1 ein festgelegter ADC-Bereich optimal ausgenutzt werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der abhängigen Ansprüche unabhängig von den in Bezug genommenen Ansprüchen. Insbesondere sind die einzelnen Merkmale der unabhängigen Ansprüche jeweils unabhängig voneinander offenbart. Zusätzlich sind auch die Merkmale der abhängigen Ansprüche unabhängig von sämtlichen Merkmalen der unabhängigen Ansprüche offenbart.

**Bezugszeichenliste**

| 1 | elektronische Anordnung |
| 10 | Photodetektor |
| 11 | Anodenanschluss des Photodetektors |
| 12 | Kathodenanschluss des Photodetektors |
| 20 | Operationsverstärker |
| 21 | erster Eingang des Operationsverstärkers |
| 22 | zweiter Eingang des Operationsverstärkers |
| 23 | Ausgang des Operationsverstärkers |
| 30 | Spannungsteiler |
| 31 | Eingang des Spannungsteilers |
| 32 | erster Ausgang des Spannungsteilers |
| 33 | zweiter Ausgang des Spannungsteilers |
| 41 | erster Pfad |
| 42 | zweiter Pfad |
| 43 | Gegenkopplungspfad |
| 44 | Abzweigungspfad |
| 45 | Bereich in Gegenkopplungspfad |
| 50 | Vorspannungsanschluss |
| 60 | Masseanschluss |
| 100 | optischer Gassensor |
| 110 | Messzelle |
| 120 | Strahlungsquelle |
| 200 | Verfahren |
| C | Kondensator |
| R1-R5 | Widerstände |
| S1-S3 | Verfahrensschritte |

**Patentansprüche**

1. Elektronische Anordnung (1) zum Bestimmen eines Photostroms unter Berücksichtigung einer Temperaturabhängigkeit, umfassend:

einen Photodetektor (10), der einen Anodenanschluss (11) und einen Kathodenanschluss (12) aufweist;
einen Operationsverstärker (20), der einen ersten Eingang (21), einen zweiten Eingang (22) und einen Ausgang (23) aufweist, wobei der Anodenanschluss (11) des Photodetektors (10) und der erste Eingang (21) des Operationsverstärkers (20) elektrisch miteinander verbunden sind und der Kathodenanschluss (12) des Photodetektors (10) und der zweite Eingang (22) des Operationsverstärkers (20) elektrisch miteinander verbunden sind; und
einen Vorspannungsanschluss (50), der über einen ersten Pfad (41) mit dem Anodenanschluss (11) des Photodetektors (10) und dem ersten Eingang (21) des Operationsverstärkers (20) elektrisch verbunden ist, **dadurch gekennzeichnet, dass** die elektronische Anordnung (1) ferner umfasst:
einen Spannungsteiler (30), der innerhalb des ersten Pfades (41) zwischen dem Anodenanschluss (11) des Photodetektors (10) und dem Vorspannungsanschluss (50) angeordnet ist.

2. Elektronische Anordnung (1) nach Anspruch 1, **dadurch gekennzeichnet, dass** der Spannungsteiler (30) ausgestaltet ist, um bei einer am Vorspannungsanschluss (50) anliegenden Spannung eine Vorspannung des Photodetektors (10) bereitzustellen, die

a) einen Wert von 2 mV oder kleiner, insbesondere 1 mV oder kleiner, aufweist, und/oder
b) um einen Faktor von mindestens 100, insbesondere mindestens 200, geringer als die am Vorspannungsanschluss (50) anliegende Spannung ist.

3. Elektronische Anordnung (1) nach Anspruch 1 oder 2, **dadurch gekennzeichnet, dass** der Vorspannungsanschluss (50) ferner mit dem Kathodenanschluss (12) des Photodetektors (10) und dem zweiten Eingang (22) des Operationsverstärkers (20) elektrisch verbunden ist.

4. Elektronische Anordnung (1) nach einem der vorherigen Ansprüche, **dadurch gekennzeichnet, dass** der zweite Eingang (22) des Operationsverstärkers (20) als ein invertierender Eingang des Operationsverstärkers (20) und/oder der Operationsverstärker (20) als Teil eines Transimpedanzverstärkers ausgeführt ist.

5. Elektronische Anordnung (1) nach einem der vorherigen Ansprüche, **dadurch gekennzeichnet, dass** die elektrische Anordnung (1) ferner umfasst:
einen Gegenkopplungspfad (43), der den zweiten Eingang (22) des Operationsverstärkers (20) und den Ausgang (23) des Operationsverstärkers (20) elektrisch miteinander verbindet, wobei der Gegenkopplungspfad (43) einen Widerstand, insbesondere zwei in Reihe geschaltete Widerstände (R3, R4) aufweist.

6. Elektronische Anordnung (1) nach Anspruch 5, **dadurch gekennzeichnet, dass** die elektrische Anordnung (1) ferner umfasst:
einen Abzweigungspfad (44), der den Gegenkopplungspfad (43) in einem Bereich (45) zwischen den zwei in Reihe geschalteten Widerständen (R3, R4) und den Vorspannungsanschluss (50) elektrisch miteinander verbindet, insbesondere wobei der Abzweigungspfad (44) einen Abzweigungs-Widerstand (R5) aufweist.

7. Elektronische Anordnung (1) nach Anspruch 5 oder 6, **dadurch gekennzeichnet, dass** die elektronische Anordnung (1) ferner umfasst:
einen Kondensator (C), der zur Ausbildung eines Tiefpasses parallel zu dem Widerstand, insbesondere den zwei in Reihe geschalteten Widerständen (R3, R4) des Gegenkopplungspfades (43) angeordnet ist.

8. Elektronische Anordnung (1) nach einem der vorherigen Ansprüche, **dadurch gekennzeichnet, dass**
der Spannungsteiler (30) einen Eingang (31), einen ersten Ausgang (32) und einen zweiten Ausgang (33) aufweist, wobei der Eingang (31) des Spannungsteilers (30) mit dem Vorspannungsanschluss (50) elektrisch verbunden ist und der erste Ausgang (32) des Spannungsteilers (30) mit dem Anodenanschluss (11) des Photodetektors (10) elektrisch verbunden ist, insbesondere wobei die am ersten Ausgang (32) des Spannungsteilers (30) bereitgestellte Spannung um einen Faktor von mindestens 100, insbesondere mindestens 200, geringer als die am Eingang (31) des Spannungsteilers (30) anliegende Spannung ist.

9. Elektronische Anordnung (1) nach Anspruch 8, **dadurch gekennzeichnet, dass** der Spannungsteiler (30) einen ersten Widerstand (R1) und einen zweiten Widerstand (R2) aufweist, wobei zwischen dem Eingang (31) des Spannungsteilers (30) und dem ersten Ausgang (32) des Spannungsteilers (30) der erste Widerstand (R1) angeordnet ist und zwischen dem Eingang (31) des Spannungsteilers (30) und dem zweiten Ausgang (33) des Spannungsteilers (30) der erste Widerstand (R1) und der zweite Widerstand (R2) angeordnet sind.

10. Elektronische Anordnung (1) nach einem der vorherigen Ansprüche, **dadurch gekennzeichnet, dass** die elektronische Anordnung (1) ferner umfasst:
einen Masseanschluss (60), der mit dem Anodenanschluss (11) des Photodetektors (10) und dem Vorspannungsanschluss (50) elektrisch verbunden ist, insbesondere wobei der zweite Ausgang (33) des Spannungsteilers (30) mit dem Masseanschluss (60) elektrisch verbunden ist.

11. Elektronische Anordnung (1) nach einem der vorherigen Ansprüche, **dadurch gekennzeichnet, dass** zwischen dem Ausgang (23) des Operationsverstärkers (20) und dem Vorspannungsanschluss (50) eine Ausgangsspannung in Abhängigkeit eines am Photodetektor (10) anliegenden Stroms bestimmbar und/oder abgreifbar ist.

12. Elektronische Anordnung (1) nach einem der vorherigen Ansprüche, **dadurch gekennzeichnet, dass** der Photodetektor (10) eine Photodiode ist.

13. Optischer Gassensor (100), umfassend:

eine Messzelle (110) zur Aufnahme eines Gases; und
eine Strahlungsquelle (120) zum Emittieren einer Strahlung in Richtung der Messzelle (110),

**dadurch gekennzeichnet, dass** der optische Gassensor (100) ferner umfasst:
eine elektronische Anordnung (1) nach einem der vorherigen Ansprüche, wobei der Photodetektor (10) der elektronischen Anordnung (1) zur Detektion von zumindest einem Teil der Strahlung, die die Messzelle (110) durchtreten hat, angeordnet ist.

14. Verfahren (200) zum Bestimmen eines Photostroms unter Berücksichtigung einer Temperaturabhängigkeit, **dadurch gekennzeichnet, dass** das Verfahren (200) mittels einer elektronischen Anordnung (1) nach einem der Ansprüche 1 bis 12 und/oder einem optischen Gassensor (100) nach Anspruch 13 ausgeführt wird, wobei das Verfahren (200) umfasst:

Bereitstellen (S1) einer Vorspannung des Photodetektors (10) durch Anlegen einer Spannung am Vorspannungsanschluss (50);
Bestimmen (S2) einer ersten Ausgangsspannung der elektrischen Anordnung (1) und/oder des optischen Gassensors (100) bei bereitgestellter Vorspannung, wobei der Photodetektor (10) nicht von einer Strahlung bestrahlt wird und/oder eine Strahlungsquelle (120) zum Emittieren einer Strahlung deaktiviert ist; und
Bestimmen (S3) einer zweiten Ausgangsspannung der elektrischen Anordnung (1) und/oder des optischen Gassensors (100) bei bereitgestellter Vorspannung, wobei der Photodetektor (10) von einer Strahlung bestrahlt wird und/oder die Strahlungsquelle (120) aktiviert ist.

15. Verfahren (200) nach Anspruch 14, **dadurch gekennzeichnet, dass** das Verfahren (200) mittels des optischen Gassensors (100) ausgeführt wird, wobei ein Gasgehalt innerhalb der Messzelle (110) aus einer Differenz der zweiten Ausgangsspannung und ersten Ausgangsspannung bestimmt wird.

Fig. 1

Fig. 2

Fig. 3

Fig. 4

Fig. 5

Fig. 6

Fig. 7

EP 4 733 723 A1

Europäisches Patentamt
European Patent Office
Office européen des brevets

# EUROPÄISCHER RECHERCHENBERICHT

Nummer der Anmeldung

EP 25 20 4492

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2004 015671 A (OPTOELECTRONICS CO LTD) 15. Januar 2004 (2004-01-15) | 1,3-12 | INV. G01J1/44 |
| A | * Absätze [0040] - [0047]; Abbildung 7 * ----- | 2,13-15 | G01N21/3504 |
| A | DE 10 2012 007016 B3 (DRAEGER SAFETY AG & CO KGAA [DE]) 10. Oktober 2013 (2013-10-10) * Abbildungen 1, 2, 12 * ----- | 1-15 | |
| A | DE 10 2004 049855 B3 (VISTEON GLOBAL TECH INC [US]) 23. Februar 2006 (2006-02-23) * Abbildung 3 * ----- | 1-15 | |
| A | US 2004/052299 A1 (JAY PAUL R [CA] ET AL) 18. März 2004 (2004-03-18) * Absätze [0038], [0039]; Abbildung 4 * ----- | 1-15 | |
| A | US 2022/065709 A1 (LI CHUANLIN [CN] ET AL) 3. März 2022 (2022-03-03) * Abbildung 7 * ----- | 1-15 | |
| A | EP 3 581 898 A1 (E E ELEKTRONIK GES M B H [AT]) 18. Dezember 2019 (2019-12-18) * Abbildungen 4A, 4B * ----- | 1-15 | RECHERCHIERTE SACHGEBIETE (IPC) G01J G01N |

Der vorliegende Recherchenbericht wurde für alle Patentansprüche erstellt

| Recherchenort | Abschlußdatum der Recherche | Prüfer |
|---|---|---|
| München | 6. Februar 2026 | Haan, Martine |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 20 4492

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-02-2026

| Im Recherchenbericht angeführtes Patentdokument | Datum der Veröffentlichung | Mitglied(er) der Patentfamilie | Datum der Veröffentlichung |
|---|---|---|---|
| JP 2004015671 A | 15-01-2004 | JP 3999055 B2 | 31-10-2007 |
| | | JP 2004015671 A | 15-01-2004 |
| DE 102012007016 B3 | 10-10-2013 | DE 102012007016 B3 | 10-10-2013 |
| | | GB 2500993 A | 09-10-2013 |
| | | US 2013265579 A1 | 10-10-2013 |
| DE 102004049855 B3 | 23-02-2006 | KEINE | |
| US 2004052299 A1 | 18-03-2004 | AU 2003250690 A1 | 16-02-2004 |
| | | CA 2436177 A1 | 29-01-2004 |
| | | US 2004019459 A1 | 29-01-2004 |
| | | US 2004052299 A1 | 18-03-2004 |
| | | WO 2004011897 A1 | 05-02-2004 |
| US 2022065709 A1 | 03-03-2022 | EP 3985368 A1 | 20-04-2022 |
| | | KR 20220027815 A | 08-03-2022 |
| | | US 2022065709 A1 | 03-03-2022 |
| | | WO 2022040928 A1 | 03-03-2022 |
| EP 3581898 A1 | 18-12-2019 | CN 110595530 A | 20-12-2019 |
| | | DE 102019208173 A1 | 19-12-2019 |
| | | EP 3581898 A1 | 18-12-2019 |
| | | JP 7266436 B2 | 28-04-2023 |
| | | JP 2019215316 A | 19-12-2019 |
| | | KR 20190141077 A | 23-12-2019 |
| | | US 2019383732 A1 | 19-12-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 3581898 A1